# EUROPÄISCHE PATENTANMELDUNG

(11) **EP 3 403 744 A1**
(43) Veröffentlichungstag der Anmeldung: **21.11.2018**
(21) Anmeldenummer: 17171983.4
(22) Anmeldetag: 19.05.2017
(51) Int. Cl.: B22F 3/105, B28B 1/00, F16H 57/04, B22F 5/08, B22F 5/10, B33Y 80/00, B29C 64/153, F16H 55/06, F16H 57/02

(54) **MASCHINENBAUTEIL MIT GENERATIVES VERFAHREN HERGESTELLT**

(71) Anmelder: Siemens Aktiengesellschaft, 80333 München (DE)
(72) Erfinder: Christ, Michael, 48249 Dülmen (DE)

(57) **Zusammenfassung**

Die Erfindung betrifft ein Maschinenbauteil. Das Maschinenbauteil wurde durch 3D-Druck erzeugt. Das Maschinenbauteil weist durch den 3D-Druck erzeugte räumliche Strukturen auf. Die durch den 3D-Druck erzeugten räumlichen Strukturen dienen zur Einstellung eines Massenträgheitsmoments des Maschinenbauteils und/oder zur Reduktion des Gewichts des Maschinenbauteils und/oder zur Aufnahme eines Kühlmittels des Maschinenbauteils.

## Beschreibung

Die Erfindung betrifft ein Maschinenbauteil.

Zur Herstellung eines Maschinenbauteils mit herkömmlichen Produktionsverfahren ist es bekannt, ein Guss- oder Schmiedeteil einer spanabhebenden Nachbearbeitung zu unterziehen. Ein auf diese Weise hergestelltes Maschinenbauteil unterliegt Designbeschränkungen, die durch das Produktionsverfahren bedingt sind.

Seit einiger Zeit findet das sogenannte 3D-Drucken, auch unter der Bezeichnung Additive Manufacturing, zunehmend Verbreitung in der Produktion von Bauteilen.

Es ist eine Aufgabe der Erfindung, ein verbessertes Maschinenbauteil bereitzustellen.

Diese Aufgabe wird erfindungsgemäß durch ein Maschinenbauteil mit den in Anspruch 1 angegebenen Merkmalen gelöst. Das Maschinenbauteil wurde durch 3D-Druck erzeugt. Das Maschinenbauteil weist durch den 3D-Druck erzeugte räumliche Strukturen auf. Die durch den 3D-Druck erzeugten räumlichen Strukturen dienen zur Einstellung eines Massenträgheitsmoments des Maschinenbauteils und/oder zur Reduktion des Gewichts des Maschinenbauteils und/oder zur Aufnahme eines Kühlmittels des Maschinenbauteils.

Unter 3D-Druck werden alle Verfahren auf dem Gebiet des Additive Manufacturing (= AM) verstanden, z.B. Pulverbettverfahren wie selektives Laserschmelzen SLM, selektives Lasersintern SLS, Binder Jetting und Elektronenstrahlschmelzen EBM (= Electron Beam Melting); Freiraumverfahren wie Fused Deposition Modeling FDM, Auftragschweißen und Metall-PulverAuftragsverfahren MPA; und andere Schichtbauverfahren wie 3D-Siebdruck von Metallen. Die vorhergehende Aufzählung nennt nur einige mögliche AM-Verfahren und ist nicht als Ausschluss anderer geeigneter AM-Verfahren zu interpretieren. Räumliche Strukturen sind Hohlräume mit oder ohne Verbindung zur Umgebung, d.h. offene oder abgeschlossene Hohlräume im Maschinenbauteil. Allgemein trägt das erfindungsgemäße Maschinenbauteil dazu bei, geringere Kosten, geringeres Gewicht, schnellere Lieferzeiten und eine geringere Wärmeentwicklung eines Maschinenbauteils zu erreichen. Neben geringeren Produktionskosten und schnelleren Lieferzeiten bei geringerem Working Capital führen erfindungsgemäße Maschinenbauteile zu einer Schonung von Ressourcen.

Die durch den 3D-Druck erzeugten räumlichen Strukturen können Kanäle oder Hohlräume sein. Die durch den 3D-Druck erzeugten räumlichen Strukturen können Poren sein, z.B. eine Vielzahl von relativ kleinvolumigen Hohlräumen; dabei ist es möglich, dass zumindest eine Teilmenge der Poren durch Hohlräume miteinander verbunden ist.

Jedes Maschinenbausystem, welches ein Maschinenbauteil aufweist, ist ein schwingfähiges System. Eine Einstellung eines Massenträgheitsmoments des Maschinenbauteils kann zur gezielten Anpassung des Gesamt-Schwingungssystems, d.h. zu einer Positionierung des schwingfähigen Systems in einem Frequenzbereich außerhalb von störenden Schwingungen genutzt werden. Ein geringes Massenträgheitsmoment ist z.B wichtig bei Servomotoren.

Eine zur Reduktion des Gewichts des Maschinenbauteils dienende räumliche Struktur, welche durch den 3D-Druck erzeugt wurde, ist vor allem anwendbar für Maschinenbauteile, die insbesondere in Luft-und Raumfahrt eingesetzt werden. Auch bei Getrieben, wie z.B. Flugzeuggetrieben, Schiffsgetrieben, Wind- und Krangetrieben, hat eine Gewichtsreduktion den wesentlichen Vorteil, dass dadurch das Gewicht der Anschlusskonstruktion reduziert werden kann; das spart Ressourcen wie Treibstoff (Luft-und Raumfahrt, Schiff, Kfz) oder Stahl (Kran). Gewichtsreduktion eines Maschinenbauteil ist außerdem besonders interessant bei WKA (= Windkraftanlagen). Neben der Gewichtseinsparung wirkt ein leichteres Maschinenbauteil auch schwingungsdämpfend.

Eine zur Aufnahme eines Kühlmittels des Maschinenbauteils dienende räumliche Struktur, welche durch den 3D-Druck erzeugt wurde, ist die Basis für ein thermisch optimiertes Maschinenbauteil, das eine Erhöhung der thermischen Grenzleistung und somit einen Einsatz von kleineren Komponenten möglich macht.

Vorteilhafte Ausgestaltungen und Weiterbildungen der Erfindung sind in den abhängigen Ansprüchen angegeben.

Gemäß einer bevorzugten Ausgestaltung der Erfindung handelt es sich um ein Maschinenbauteil aus einem metallischen Werkstoff. Zur Herstellung eines metallischen Maschinenbauteils mit 3D-Druck können alle AM-Verfahren verwendet werden, mit welchen Metall aufgebracht werden kann. Ein Vorteil dieser Ausgestaltung ist, dass nicht nur eine große Freiheit im Design, welche der 3D-Druck erlaubt, besteht, sondern auch stabile Maschinenbauteile hergestellt werden können, die zur Übertragung großer Kräfte und/oder großer Drehmomente geeignet sind, z.B. Zahnräder, Wellen und Planetenträger.

Gemäß einer bevorzugten Ausgestaltung der Erfindung ist das Maschinenbauteil als eine Kupplung ausgeformt, welche einen oder mehrere durch den 3D-Druck erzeugte Hohlräume zur Erhöhung der Wuchtgüte des Maschinenbauteils aufweist. Die Hohlräume können auch dazu dienen, das Gewicht zu reduzieren. Ein Vorteil dieser Ausgestaltung ist, dass die zur Auswuchtung erforderlichen Strukturen im Material im Inneren des Maschinenbauteils ausgeformt werden können. Somit wird das äußere Erscheinungsbild des Maschinenbauteils nicht gestört und die glatte Oberfläche des Maschinenbauteils nicht unterbrochen, was vorteilhaft in Bezug auf eine Sauberhaltung des Maschinenbauteils ist.

Gemäß einer bevorzugten Ausgestaltung der Erfindung ist das Maschinenbauteil als ein Rotor ausgeformt, welche einen oder mehrere durch den 3D-Druck erzeugte Hohlräume zur Verbesserung des Trägheitsfaktors des Maschinenbauteils aufweist. Das Massenträgheitsmoment des Rotors kann somit gezielt variiert werden durch Hohlräume im Rotor. Eine äußerlich geometrisch gleiche Welle kann unterschiedliche Massenträgheitsmomente aufweisen. Somit kann der FI-Faktor, d.h. das Verhältnis von Massenträgheit des Abtriebs zu (Massenträgheit des Antriebs i2), gezielt optimiert werden. Ein Vorteil dieser Ausgestaltung ist, dass die zur Einstellung des Trägheitsfaktors erforderlichen Strukturen im Material im Inneren des Maschinenbauteils ausgeformt werden können. Somit wird das äußere Erscheinungsbild des Maschinenbauteils nicht gestört und die glatte Oberfläche des Maschinenbauteils nicht unterbrochen, was vorteilhaft in Bezug auf eine Sauberhaltung des Maschinenbauteils ist.

Gemäß einer bevorzugten Ausgestaltung der Erfindung ist das Maschinenbauteil als ein Rotor, insbesondere eines Servomotors, ausgeformt, welche einen oder mehrere durch den 3D-Druck erzeugte Hohlräume zur Verbesserung des Trägheitsfaktors des Maschinenbauteils aufweist. Ein Vorteil dieser Ausgestaltung ist, dass insbesondere bei Servomotoren ein geringes Massenträgheitsmoment wichtig ist.

Bei den durch den 3D-Druck ermöglichten Maßnahmen zur Veränderung des Massenträgheitsmoments bleibt die äußere Kontur gleich; das Massenträgheitsmoment wird durch Hohlräume angepasst. Die Festigkeit des Maschinenbauteils kann mittels FEM (= Finite-Elemente-Methode) optimiert werden. Dabei kann das Massenträgheitsmoment in Abhängigkeit von der Bauteilgeometrie außen angepasst werden.

Gemäß einer bevorzugten Ausgestaltung der Erfindung ist das Maschinenbauteil als eine Welle oder als ein Rotor ausgeformt, welche bzw. welcher mindestens einen durch den 3D-Druck erzeugten Hohlraum zur Reduktion des Gewichts des Maschinenbauteils aufweist. Gewichtsoptimierte Bauteile können in allen denkbaren Anwendungen eingesetzt werden. Der spezielle Einsatz in Luft- und Raumfahrt, Schiffsgetrieben, Krangetrieben, etc. hat den wesentlichen Vorteil, dass dadurch das Gewicht der Anschlusskonstruktion reduziert werden kann. Das schont natürliche Ressourcen wie Treibstoff (Luft- und Raumfahrt, Schiff, Kfz) oder Stahl (Kran).

Die Festigkeit eines durch 3D-Druck gewichtsoptimierten Maschinenbauteils kann mittels FEM optimiert werden. Gewichtsreduktion ist an folgenden Bauteilen möglich, ohne dass die folgende Aufzählung abschließend sein soll: Stirnräder, Hohlwellen, Wellen, Rotoren, Distanzring, Hohlrad, Gehäusedeckel, Drehmomentstütze, Planetenachse.

Zur Gewichts-Optimierung sind beliebige, mittels FEM oder CFD (= Computational Fluid Dynamics), d.h. numerische Strömungsmechanik, optimierte Strukturen denkbar:
- Wellen und Rotoren könnten direkt mit einer Bohrung oder als Hohlwelle mit/ ohne innere/äußere Versteifungsrippen ausgedruckt werden oder innen hohl sein oder Hohlräume aufweisen.
- Stirnräder könnten aus einer gewichts-optimierten mittels 3D-Druck hergestellten Nabe und einem per 3D-Druck hergestellten Zahnkranz bestehen. Der Zahnkranz kann nach dem 3D-Druck thermisch behandelt und/oder warmgepresst werden, um die Festigkeit zu erhöhen und die Härteverzüge zu minimieren.
- Wälzkörper von Wälzlagern können innen hohl sein oder partiell Hohlräume aufweisen.
- Gleitlager können direkt mit Schmierstoffbohrungen und Lastkorrekturen aus stetig differenzierbaren Funktionen per 3D-Druck hergestellt werden.
- Verzahnte Teile, Gehäuse und Wellen können innen hohl sein oder Hohlräume aufweisen.

Gemäß einer bevorzugten Ausgestaltung der Erfindung weist das Maschinenbauteil mindestens einen durch den 3D-Druck erzeugten Kühlkanal auf. Ein Vorteil dieser Ausgestaltung ist, dass durch 3D-Druck erzeugte Kühlkanäle beliebige Formen und Verläufe aufweisen können. Die Kühlkanäle können gekrümmt sein oder jede andere beliebige geometrische Kontur aufweisen, die mit konventionellen Fertigungsverfahren nicht oder nur kostenintensiv herstellbar sind.

Gemäß einer bevorzugten Ausgestaltung der Erfindung weist das Maschinenbauteil mindestens einen durch den 3D-Druck erzeugten Hohlraum auf, in welchem sich eine ebenfalls durch den 3D-Druck erzeugte Substanz mit schwingungsdämpfenden, wärmeleitenden oder wärmeisolierenden Eigenschaften befindet. Ein Vorteil dieser Ausgestaltung ist, dass durch den 3D-Druck die inneren Eigenschaften des Maschinenbauteils an den Einsatzzweck angepasst werden können, so wie das vorher nur mit großem Aufwand möglich war.

Gemäß einer bevorzugten Ausgestaltung der Erfindung ist das Maschinenbauteil als ein verzahntes Getriebebauteil ausgeformt, welches mindestens eine durch den 3D-Druck erzeugte Kühlungsbohrung aufweist, welche die Blok'sche Blitztemperatur beim linienförmigen Zahneingriff reduziert. Ein Vorteil dieser Ausgestaltung ist, dass die durch 3D-Druck erzeugten Kühlkanäle beliebige Formen und Verläufe aufweisen können. Die Kühlkanäle können gekrümmt sein oder jede andere beliebige geometrische Kontur aufweisen, die mit konventionellen Fertigungsverfahren nicht oder nur kostenintensiv herstellbar sind.

Zur Gewichts- und/oder thermischen Optimierung sind beliebige, vorzugsweise mittels FEM (= Finite-Elemente-Methode) oder CFD (= Computational Fluid Dynamics), d.h. numerischer Strömungsmechanik, optimierte Strukturen denkbar:
- Ein Zahnrad kann ausgehöhlt hergestellt sein: Eine wärmeabführende Flüssigkeit, z.B. ein Öl, hat Zugang zu dem Hohlraum im Inneren des Zahnrads und somit Zugang zu einer großen Oberfläche mit der Konsequenz, dass das Zahnrad nicht so heiß wird wie ohne Hohlraum. Die Lebensdauer des Zahnrads kann also verlängert werden.
- Planetenträger können mit Kühlkanälen versehen werden, die mit herkömmlichen Fertigungsverfahren nur per Kern (bei Guss) oder durch Bohren angebracht werden können. Planetenträger könnten per FEM/CFD gezielt optimiert innen hohl ausgebildet sein: Eine wärmeabführende Flüssigkeit, z.B. ein Öl, hat Zugang zu dem Hohlraum im Inneren des Planetenträgers und somit Zugang zu einer großen Oberfläche mit der Konsequenz, dass der Planetenträger nicht so heiß wird wie ohne Hohlraum. Die Lebensdauer des Planetenträgers kann also verlängert werden.
- Eine gewichtsoptimierte Nabe kann über Öl- oder Wasserkanäle verfügen, die zur Wärmeabfuhr dienen.

Durch 3D-Druck kann auch ein weiteres Problem gelöst werden, wie im Folgenden beschrieben wird: Ein grundlegendes technisches Problem heute ist, dass die Lieferung von Ersatzteilen zu viel Zeit in Anspruch nimmt. Transport und Verzollung sind kosten- und zeitintensiv. Aufgrund der herkömmlichen Fertigungsverfahren ist eine thermische und gewichtstechnische Optimierung von mechanischen, elektrischen und elektronischen Bauteilen aus Kosten- oder Fertigungsgründen nur bedingt möglich.

Die schnelle Verfügbarkeit von Ersatzteilen wurde bislang so gelöst, dass Bauteile zentral oder weltweit auf Lager gelegt wurden. Das kostet Geld und ist daher unwirtschaftlich aufgrund des gebundenen Kapitals und der Gefahr, dass Bauteile jahrelang gar nicht benötigt werden. Ohne Lagerhaltung muss ein Bauteil erst den herkömmlichen Fertigungsprozess durchlaufen. Das ist sehr zeitintensiv und verärgert Kunden bei einem Anlagenstillstand. Für eine Gewichtsoptimierung von Bauteilen wurden bspw. Vollwellen aufgebohrt, Stirnräder abgedreht und gebohrt. Gehäuse wurden mittels FEM von der Gehäusewandstärke her optimiert aber bedingt durch den Gießprozess ist das Einbringen von Hohlräumen nur durch kostenintensive Schieber und Kerne möglich. Nachträglich eingebrachte Ölkanäle wurden in der Regel gebohrt. Bei einer thermischen Optimierung von Planetenrädern und Sonnen wurden diese ebenfalls hohlgebohrt und mit gebohrten Kanälen zur Schmierstoffversorgung im Zahnfuß versehen. Planetenachsen und Planetenträger wurden ebenfalls axial und radial angebohrt, um eine Schmierstoffversorgung der Planetenlager zu erreichen. Umfangreiche Verrohrungen sind in den Getrieben mit Umlaufschmierung notwendig, um die Bauteile mit Schmierstoff zu versorgen bzw. zu kühlen.

Die schnelle Verfügbarkeit von Ersatzteilen kann mithilfe von 3D-Druck so gelöst werden, dass die das Bauteil charakterisierenden Produktinformationen in digitaler Form vorliegen. Die digitale Form kann hierbei einem 3D-Modell, STEP oder IGES-file oder einem beliebig anderen Dateiformat entsprechen. Die Dateien können in einem EDM/PDM-System wie z.B. Teamcenter oder anders global oder lokal abgelegt sein. In einem ersten Schritt zur Reduzierung der Lieferzeit, Optimierung des Gewichts und Erhöhung der thermischen Grenzleistung der jeweiligen Bauteile könnte ein zentraler 3D-Drucker die Bauteile gemäß den Produktinformationen aus der Datendatei herstellen. In einem zweiten Schritt wäre es möglich, dass die 3D-Drucker weltweit verteilt beim Hersteller stehen und nur die Datendatei heruntergeladen wird, so dass lokal der 3D-Druck erfolgen kann. In einem dritten Schritt wäre es möglich, dass 3D-Drucker bei OEMs aufgestellt werden und dann die Datendatei zur Erzeugung der Bauteile beim OEM genutzt wird. In einer vierten Ausbaustufe wäre es möglich, dass Endkunden einen 3D-Drucker anschaffen oder vom Hersteller erhalten und die Bauteile direkt dort ausdrucken, wo sie benötigt werden. Denkbar wäre weiterhin, dass der 3D-Drucker je nach Größe in einem oder mehreren Transportbehältern, wie z.B. Containern, zu Baustellen weltweit gesendet werden und der entsprechende Monteur die erforderlichen Ersatzteile auf der Baustelle produzieren kann.

Somit wird ein Verfahren zum weltweiten Herstellen von Ersatzteilen durch den 3D-Druck bereit gestellt. Der Versand von 3D-Druckern auf entsprechende Baustellen kann dadurch erfolgen, dass die Drucker in einen oder mehrere Container passen. Es gibt somit eine lokale Erzeugung eines 3D-Files und eine globale Fertigung der Daten.

Weiterhin kann man mit dem beschriebenen Verfahren zum weltweiten Herstellen von Ersatzteilen durch den 3D-Druck noch eine weitere Technologie verwenden, und zwar die Technologie zur Herstellung des benötigten Metallpulvers vor Ort. Defekte große Bauteile könnten mit einer Pulverisierungsanlage (Brecher, o.ä.) zerkleinert und in Pulver umgewandelt werden. Somit steht dann auch weltweit das entsprechende Pulver für den 3D-Druck zur Verfügung.

Im Folgenden wird die Erfindung anhand mehrerer Ausführungsbeispiele unter Zuhilfenahme der beiliegenden Zeichnung erläutert. Es zeigt jeweils schematisch und nicht maßstabsgetreu
- Fig. 1: einen Schnitt einer Planetenachse;
- Fig. 2: einen Schnitt eines Wälzkörpers;
- Fig. 3: einen Schnitt eines Planetenträgers;
- Fig. 4: einen Schnitt eines Verbindungselements;
- Fig. 5: einen Schnitt eines Stirnrads;
- Fig. 6: einen Schnitt einer Kupplungsnabe;
- Fig. 7: einen Schnitt eines Distanzrings;
- Fig. 8: einen Schnitt einer Platte zum Verschließen einer Gehäuseöffnung; und
- Fig. 9: einen Schnitt einer Welle.

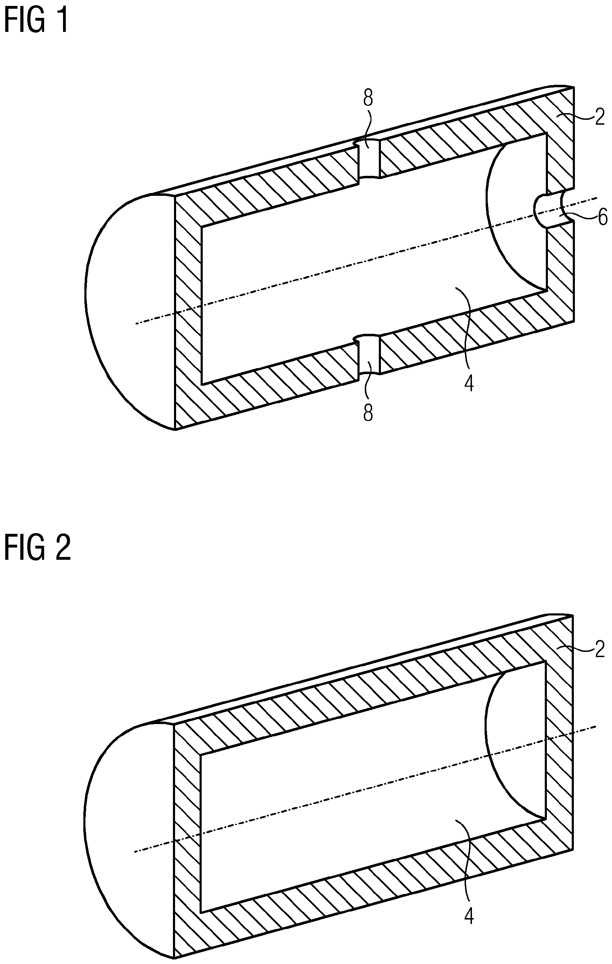

Fig. 1 zeigt einen Schnitt eines durch 3D-Druck generierten Maschinenbauteils 2, das als eine Planetenachse zum Einbau in ein Planetengetriebe ausgebildet ist. Die Planetenachse 2 ist hohl ausgebildet; der Hohlraum 4 in seinem Inneren ist durch eine axiale Einströmöffnung 6 und zwei radiale Ausströmöffnungen 8 mit der Umgebung verbunden. Durch die Einströmöffnung 6 kann eine kühlende und/oder schmierende Flüssigkeit, z.B. ein Getriebeöl, in den Hohlraum 4 einströmen und durch die beiden Ausströmöffnungen 8 ausströmen. Der Hohlraum 4 weist eine Form auf, die durch herkömmliche spanende Bearbeitungsverfahren nicht hätte geschaffen werden können.

Fig. 2 zeigt einen Schnitt eines durch 3D-Druck generierten Maschinenbauteils 2, das als ein Wälzkörper zum Einbau in ein Wälzlager ausgebildet ist. Der Wälzkörper 2 ist hohl ausgebildet; der Hohlraum 4 in von der Umgebung abgeschlossen. Der abgeschlossene Hohlraum 4 weist eine Form auf, die durch herkömmliche spanende Bearbeitungsverfahren nicht hätte geschaffen werden können. In dem durch den 3D-Druck erzeugten Hohlraum 4 kann sich eine ebenfalls durch den 3D-Druck erzeugte Substanz mit schwingungsdämpfenden, wärmeleitenden oder wärmeisolierenden Eigenschaften befinden. Der Hohlraum 4 kann auch dem Durchfluss einer Kühlflüssigkeit dienen. Der Hohlraum 4 kann aber auch einer Gewichtsreduzierung oder der Einstellung eines Massenträgheitsmoments dienen.

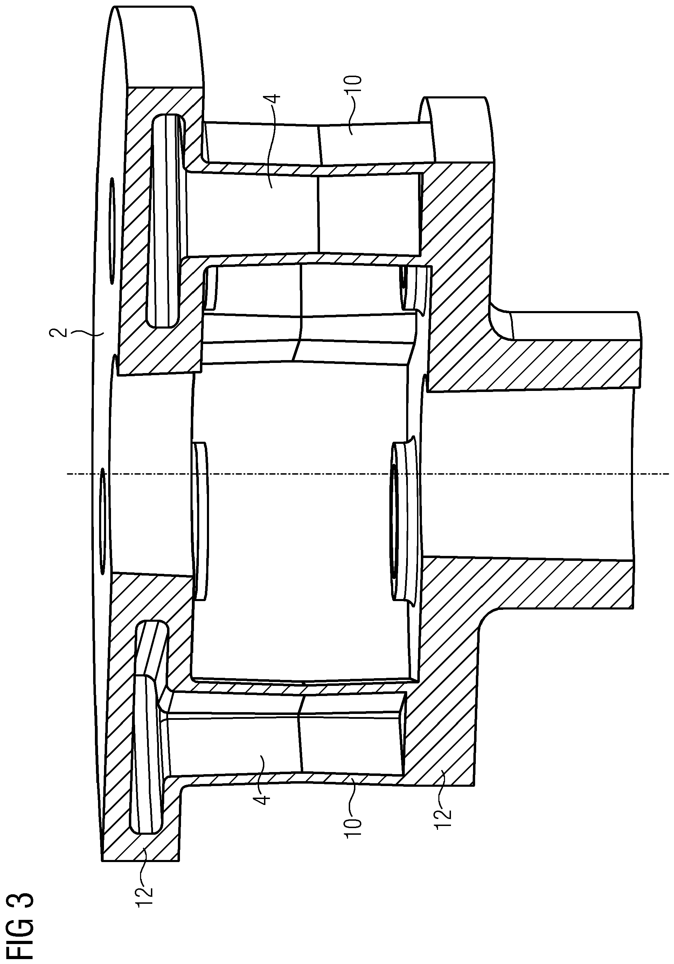

Fig. 3 zeigt einen Schnitt eines durch 3D-Druck generierten Maschinenbauteils 2, das als ein Planetenträger zum Einbau in ein Planetengetriebe ausgebildet ist. Der Planetenträger 2 weist hohle Stege 10 auf, welche die beiden Wangen 12 des Planetenträgers 2 verbinden. Die in den Stegen 10 ausgebildeten Hohlräume 4 erstrecken sich längs der Stege 10 und auch in die Wange 12 der kurzen Nabe. Die Hohlräume 4 weisen somit eine Form auf, die durch herkömmliche spanende Bearbeitungsverfahren nicht hätte geschaffen werden können. In den durch den 3D-Druck erzeugten Hohlräumen 4 kann sich eine ebenfalls durch den 3D-Druck erzeugte Substanz mit schwingungsdämpfenden, wärmeleitenden oder wärmeisolierenden Eigenschaften befinden. Die Hohlräume 4 können auch dem Durchfluss einer Kühlflüssigkeit dienen. Die Hohlräume 4 können aber auch einer Gewichtsreduzierung oder der Einstellung eines Massenträgheitsmoments dienen.

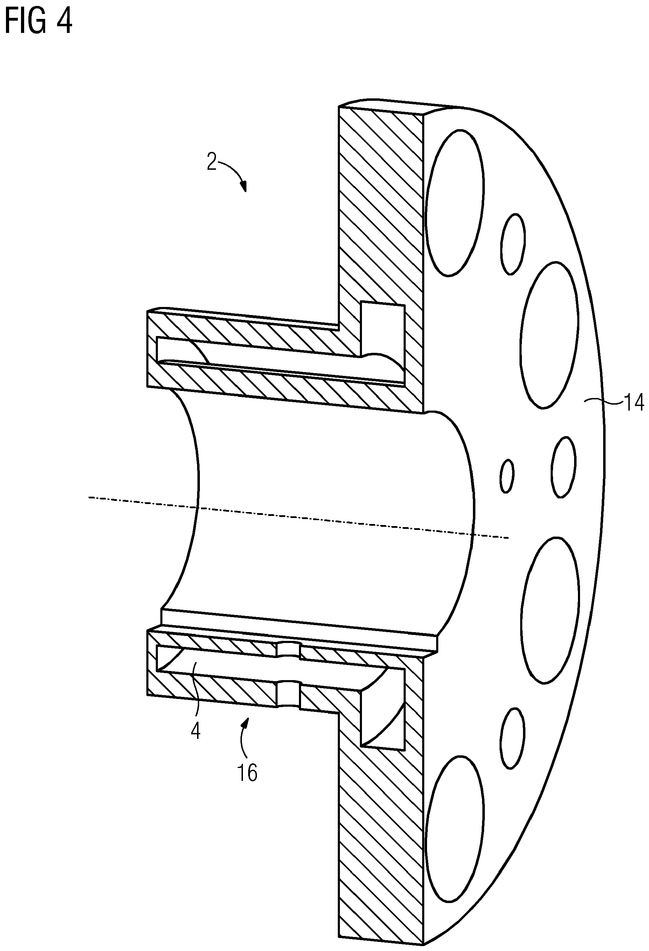

Fig. 4 zeigt einen Schnitt eines durch 3D-Druck generierten Maschinenbauteils 2, das als ein Verbindungselement 2 umfassend eine Nabe 16 und einen mit der Nabe 16 verbundenen Flansch 14. Die Nabe 16 ist hohl ausgebildet. Der in der Nabe 16 ausgebildete Hohlraum 4 erstreckt sich ringförmig um die Axialbohrung der Nabe 16 und auch in den Flansch 14 hinein. Der Hohlraum 4 weist somit eine Form auf, die durch herkömmliche spanende Bearbeitungsverfahren nicht hätte geschaffen werden können. In dem durch den 3D-Druck erzeugten Hohlraum 4 kann sich eine ebenfalls durch den 3D-Druck erzeugte Substanz mit schwingungsdämpfenden, wärmeleitenden oder wärmeisolierenden Eigenschaften befinden. Der Hohlraum 4 kann auch dem Durchfluss einer Kühlflüssigkeit dienen. Der Hohlraum 4 kann aber auch einer Gewichtsreduzierung oder der Einstellung eines Massenträgheitsmoments dienen.

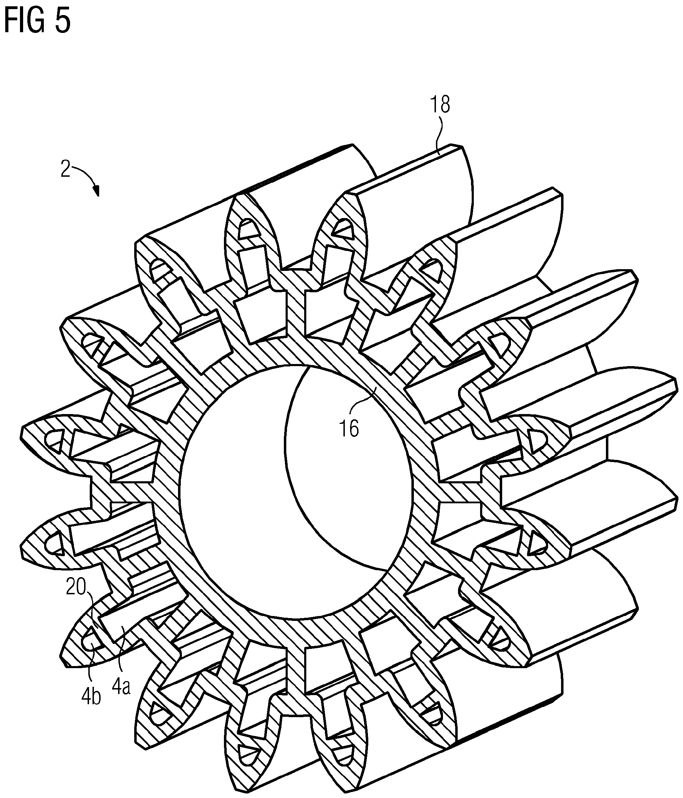

Fig. 5 zeigt einen Schnitt eines durch 3D-Druck generierten Maschinenbauteils 2, das als ein Stirnrad ausgebildet ist. Das Stirnrad 2 weist eine Nabe 16 auf, durch die das Stirnrad 2 auf einer nicht dargestellten Welle montiert werden kann. Die Nabe 16 ist radial von axial offenen ersten Hohlräumen 4a umgeben, die sich von der Nabe 16 bis in die Fußregion von Zähnen 18 des Stirnrads 2 erstecken. Durch eine Zwischenwand 20 von den ersten Hohlräumen 4a abgetrennt befinden sich in der Kopfregion der Zähne 18 axial offene zweite Hohlräume 4b. Die Hohlräume 4a, 4b weisen somit eine Form auf, die durch herkömmliche spanende Bearbeitungsverfahren nur mit großem Aufwand hätte geschaffen werden können. In den durch den 3D-Druck erzeugten Hohlräumen 4a, 4b kann sich eine ebenfalls durch den 3D-Druck erzeugte Substanz mit schwingungsdämpfenden, wärmeleitenden oder wärmeisolierenden Eigenschaften befinden. Die Hohlräume 4a, 4b können auch dem Durchfluss einer Kühlflüssigkeit dienen. Die Hohlräume 4a, 4b können aber auch einer Gewichtsreduzierung oder der Einstellung eines Massenträgheitsmoments dienen.

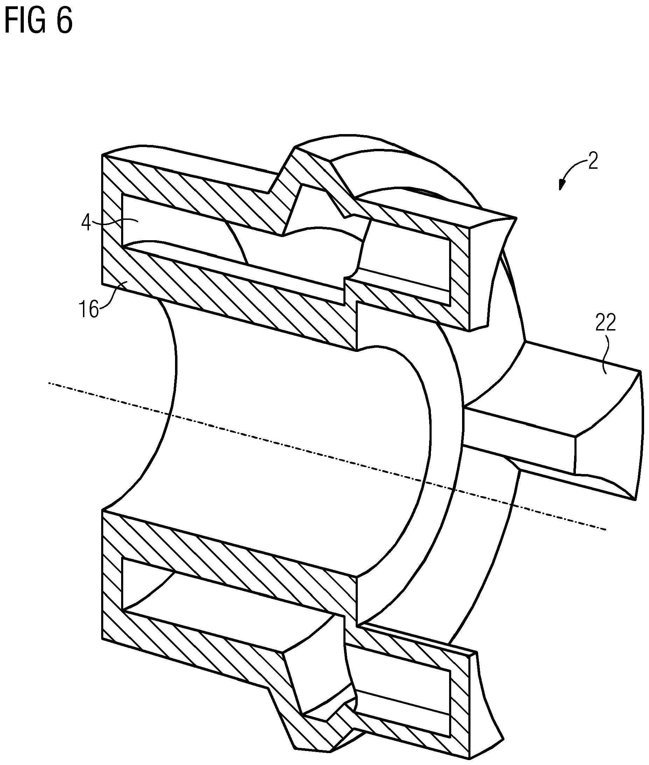

Fig. 6 zeigt einen Schnitt eines durch 3D-Druck generierten Maschinenbauteils 2, das als eine Kupplungsnabe ausgebildet ist. Die Kupplungsnabe 2 umfasst ein Nabenteil 16 und an dem Nabenteil 16 angeordnete Nocken 22. Die Kupplungsnaben werden bei Montage gesteckt. Die Verbindung der Kupplungsnabe mit der jeweiligen Welle erfolgt über Taper-Spannbuchsen oder Fertigbohrungen mit Passfederverbindung. Das Nabenteil 16 weist in seinem Inneren einen ringförmigen abgeschlossenen Hohlraum 4 auf, der sich bis in die Nocken 22 erstreckt. Der Hohlraum 4 weist somit eine Form auf, die durch herkömmliche spanende Bearbeitungsverfahren nicht hätte geschaffen werden können. In dem durch den 3D-Druck erzeugten Hohlraum 4 kann sich eine ebenfalls durch den 3D-Druck erzeugte Substanz mit schwingungsdämpfenden, wärmeleitenden oder wärmeisolierenden Eigenschaften befinden. Der Hohlraum 4 kann aber auch einer Gewichtsreduzierung oder der Einstellung eines Massenträgheitsmoments dienen.

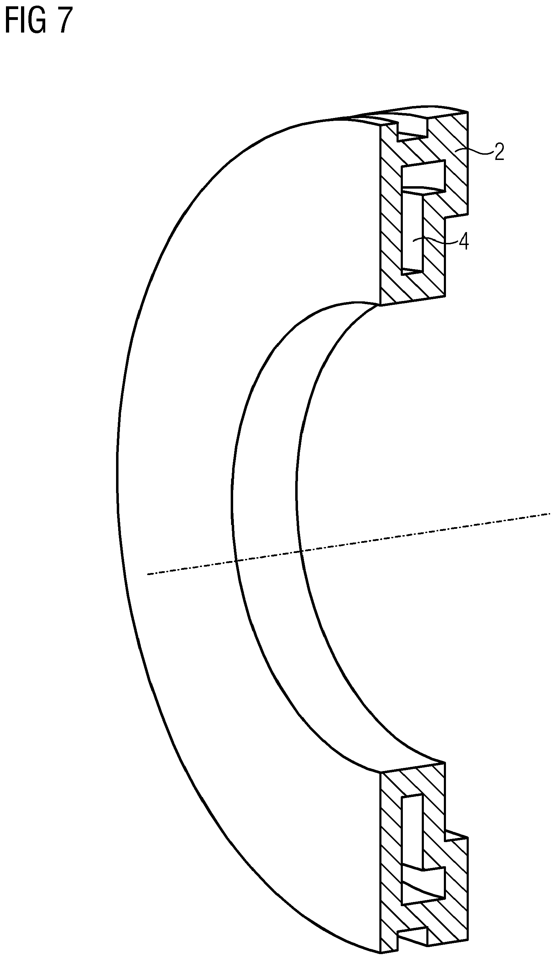

Fig. 7 zeigt einen Schnitt eines durch 3D-Druck generierten Maschinenbauteils 2, das als ein Distanzring ausgebildet ist. Der Distanzring 2 weist in seinem Inneren einen ringförmigen abgeschlossenen Hohlraum 4 auf. Der Hohlraum 4 weist somit eine Form auf, die durch herkömmliche spanende Bearbeitungsverfahren nicht hätte geschaffen werden können. In dem durch den 3D-Druck erzeugten Hohlraum 4 kann sich eine ebenfalls durch den 3D-Druck erzeugte Substanz mit schwingungsdämpfenden, wärmeleitenden oder wärmeisolierenden Eigenschaften befinden. Der Hohlraum 4 kann aber auch einer Gewichtsreduzierung oder der Einstellung eines Massenträgheitsmoments dienen.

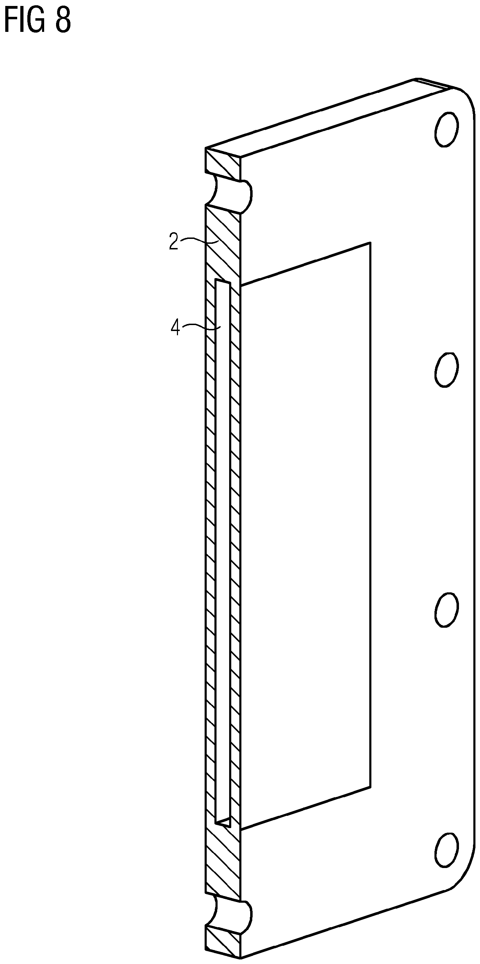

Fig. 8 zeigt einen Schnitt eines durch 3D-Druck generierten Maschinenbauteils 2, das als eine Platte zum Verschließen einer Gehäuseöffnung ausgebildet ist. Die Platte 2 weist in ihrem Inneren einen plattenförmigen abgeschlossenen Hohlraum 4 auf. Der Hohlraum 4 weist somit eine Form auf, die durch herkömmliche spanende Bearbeitungsverfahren nicht hätte geschaffen werden können. In dem durch den 3D-Druck erzeugten Hohlraum 4 kann sich eine ebenfalls durch den 3D-Druck erzeugte Substanz mit schwingungsdämpfenden, wärmeleitenden oder wärmeisolierenden Eigenschaften befinden. Der Hohlraum 4 kann aber auch einer Gewichtsreduzierung oder der Einstellung eines Massenträgheitsmoments dienen.

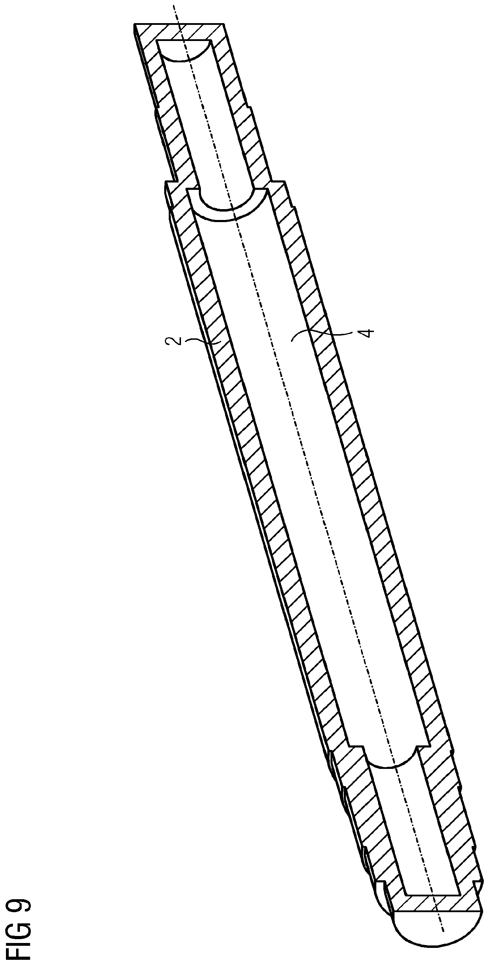

Fig. 9 zeigt einen Schnitt eines durch 3D-Druck generierten Maschinenbauteils 2, das als eine Welle ausgebildet ist. Die Welle 2 weist in ihrem Inneren einen stabförmigen abgeschlossenen Hohlraum 4 auf. Der Hohlraum 4 weist somit eine Form auf, die durch herkömmliche spanende Bearbeitungsverfahren nicht hätte geschaffen werden können. In dem durch den 3D-Druck erzeugten Hohlraum 4 kann sich eine ebenfalls durch den 3D-Druck erzeugte Substanz mit schwingungsdämpfenden, wärmeleitenden oder wärmeisolierenden Eigenschaften befinden. Der Hohlraum 4 kann aber auch einer Gewichtsreduzierung oder der Einstellung eines Massenträgheitsmoments dienen.

## Patentansprüche

1. Maschinenbauteil, wobei das Maschinenbauteil durch 3D-Druck erzeugt wurde und durch den 3D-Druck erzeugte räumliche Strukturen aufweist, welche zur Einstellung eines Massenträgheitsmoments des Maschinenbauteils und/oder zur Reduktion des Gewichts des Maschinenbauteils und/oder zur Aufnahme eines Kühlmittels des Maschinenbauteils dienen.

2. Maschinenbauteil nach Anspruch 1, wobei das Maschinenbauteil als eine Kupplung ausgeformt ist, welche einen oder mehrere durch den 3D-Druck erzeugte Hohlräume zur Erhöhung der Wuchtgüte des Maschinenbauteils aufweist.

3. Maschinenbauteil nach Anspruch 1, wobei das Maschinenbauteil als ein Rotor ausgeformt ist, welche einen oder mehrere durch den 3D-Druck erzeugte Hohlräume zur Verbesserung des Trägheitsfaktors des Maschinenbauteils aufweist.

4. Maschinenbauteil nach Anspruch 1, wobei das Maschinenbauteil als ein Rotor, insbesondere eines Servomotors, ausgeformt ist, welche einen oder mehrere durch den 3D-Druck erzeugte Hohlräume zur Verbesserung des Trägheitsfaktors des Maschinenbauteils aufweist.

5. Maschinenbauteil nach Anspruch 1, wobei das Maschinenbauteil als eine Welle oder als ein Rotor ausgeformt ist, welche mindestens einen durch den 3D-Druck erzeugten Hohlraum zur Reduktion des Gewichts des Maschinenbauteils aufweist.

6. Maschinenbauteil nach Anspruch 1, wobei das Maschinenbauteil mindestens einen durch den 3D-Druck erzeugten Kühlkanal aufweist.

7. Maschinenbauteil nach Anspruch 1, wobei das Maschinenbauteil mindestens einen durch den 3D-Druck erzeugten Hohlraum aufweist, in welchem sich eine ebenfalls durch den 3D-Druck erzeugte Substanz mit schwingungsdämpfenden, wärmeleitende oder isolierende Eigenschaften befindet.

8. Maschinenbauteil nach Anspruch 1, wobei das Maschinenbauteil als ein verzahntes Getriebebauteil ausgeformt ist, welches mindestens eine durch den 3D-Druck erzeugte Kühlungsbohrung aufweist, welche die Blok'sche Blitztemperatur beim linien- oder punktförmigen Zahneingriff reduziert.
